Europäisches Patentamt

European Patent Office

Office européen des brevets

(19)

(11) Numéro de publication : **0 481 949 A1**

# (12) DEMANDE DE BREVET EUROPEEN

(21) Numéro de dépôt : **91870163.2**

(22) Date de dépôt : **16.10.91**

(51) Int. Cl.⁵ : **A47B 47/00**, F16B 12/32, A47F 5/10, F16B 5/06

(30) Priorité : **17.10.90 BE 9000984**

(43) Date de publication de la demande : **22.04.92 Bulletin 92/17**

(84) Etats contractants désignés :
**AT BE CH DE DK ES FR GB IT LI LU NL SE**

(71) Demandeur : **AVASCO INDUSTRIES**
**Cardijnlaan 6**
**B-8600 Diksmuide (BE)**

(72) Inventeur : **Vervenne Geert**
**Krekelstraat 192**
**8870 Izegem (BE)**
Inventeur : **Van der Brempt, Dorian**
**Montebellostraat17**
**2018 Antwerpen (BE)**

(74) Mandataire : **Pieraerts, Jacques et al**
**Bureau Gevers S.A. rue de Livourne 7 bte 1**
**B-1050 Bruxelles (BE)**

(54) **Meuble polyvalent.**

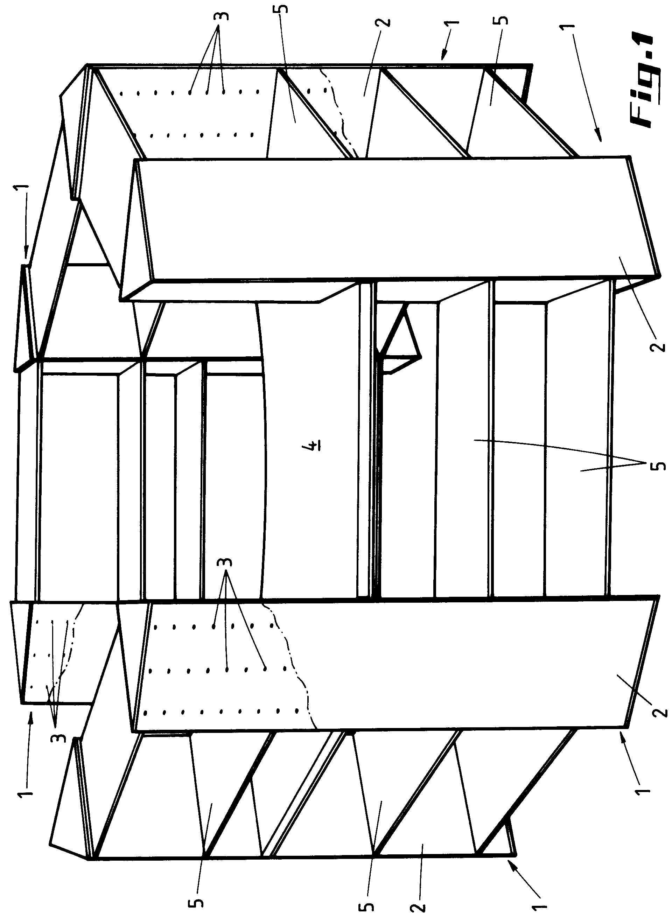

(57)     Cette invention concerne un meuble polyvalent qui peut servir de bureau, comptoir de réception, comptoir d'un magasin, etc.... et qui est formé par une série de colonnes et de planches de travail et de rangement destinées à être montée entre ces colonnes, caractérisé en ce que toutes les colonnes (1) sont formées par des panneaux (2) ayant des bords (7) latéraux pliés sur leur longueur et un moyen pour relier ces panneaux entre eux à l'aide de leur bords (7) latéraux, lesdits panneaux (2) étant pourvus de perforations (3) réparties sur leur surface et agencées pour y appliquer des broches (11) de support pour les planches (4) de rangement. L'abrégé se réfère à la figure 1.

Fig.1

EP 0 481 949 A1

Fig.2

Cette invention concerne un meuble polyvalent qui peut servir de bureau, comptoir de réception, comptoir d'un magasin, etc.... et qui est formé par une série de colonnes et de planches de travail et de rangement destinées à être montée entre ces colonnes.

Le but de l'invention est de réaliser une structure originale pour un meuble ayant une multitude d'application et qui en fonction de la découpe des colonnes et des planches de travail et de rangement qui peuvent s'y adapter, permet plusieurs formes de réalisation.

Pour réaliser ceci conformément à l'invention, toutes les colonnes sont formées par des panneaux ayant des bords latéraux pliés sur leur longueurs et un moyen pour relier ces panneaux entre eux à l'aide de leurs bords latéraux, lesdits panneaux étant pourvus de perforations réparties sur leur surface et agencé pour y appliquer des broches de support pour les planches de rangement.

Toujours suivant l'invention, ledit moyen est formé par des clips qui sont clipsés sur les extrémités des bords latéraux desdits panneaux, lesquelles extrémités sont à cette fin pliées en deux.

Un aspect remarquable de l'invention consiste en ce que lesdites perforations sont longitudinales et s'étendent en position d'utilisation des colonnes de façon horizontale, et les dites broches de support comportent une aile oblonge qui traverse lesdites perforations et deux plans d'appui qui s'étendent de façon orthogonale sur cette aile, lesdits plans d'appui étant séparés de l'aile par des fentes, de telle façon qu'après avoir glissé ladite aile à travers lesdites perforations et après rotation sur 90° de la broche une planche de rangement peut s'appuyer sur chaque plan d'appui.

Une forme de réalisation préférentielle suivant l'invention est caractérisée en ce que les bords latéraux desdits panneaux sont repliés de telle façon que trois panneaux forment une colonne.

Suivant une autre forme de réalisation, le plissement des extrémités des bords latéraux est réalisé de telle façon que deux panneaux s'étendent de façon parallèle par rapport à l'autre et forme une colonne creuse ayant la forme d'un parallélépipède.

D'autres détails avantages de l'invention seront décrits dans la description, donnée ci-dessous, d'un meuble polyvalent suivant l'invention. Cette description est uniquement donnée et à titre d'exemple et ne limite pas l'invention. Les références se rapportent aux figures jointes.

La figure 1 est une vue en perpective d'une possible forme de réalisation d'un meuble suivant l'invention.

La figure 2 est une coupe à travers une liaison d'angles de deux panneaux faisant partie d'une colonne.

La figure 3 est une vue d'en haut sur la liaison entre deux panneaux qui s'étendent en parallèle l'un par rapport à l'autre.

La figure 4 est une vue en perspective à échelle aggrandie, d'une broche suivant l'invention.

La figure 5 est une vue latérale d'une broche de support dans une position où elle peut être poussée à travers une perforation.

La figure 6 est une vue analogue où la broche de support est poussée dans une perforation.

La figure 7 montre une broche de support tournée sur 90° dans une position où elle est poussée à travers une perforation et où elle peut soutenir une planche de rangement.

Le meuble dont la figure 1 représente une vue générale en perspective consiste, dans la forme de réalisation donnée ici à titre d'exemple, de six colonnes 1 qui sont chacunes créées en joignant troix panneaux 2, lesquels panneaux comportent sur toute leur surface de petites perforations 3 longitudinales. Ces petites perforations longitudinales s'étendent, en position d'utilisation des colonnes, de façon horizontale et servent à appliquer les planches de rangement 5 à une hauteur quelconque.

En ce qui concerne les broches de support desdites planches de travail et de rangement d'autres détails seront donnés ultérieurement.

Une colonne 1 ayant une découpe triangulaire est créée en joignant trois panneaux. A la figure 2 ont voit clairement comment les extrémités des bords latéraux pliés en deux des panneaux 2 peuvent être reliés entre eux en utilisant des clips 6. A la figure 2, la référence 7 indique le bord latéral plié en deux du panneau 6. A des distances déterminées, dans le sens de la longueur des panneaux 2, l'extrémité 7' libre des bords 7 pliés en deux est découpée de telle façon qu'un clips 6 peut être clipsé dans cette encoche . Ceci offre en plus l'avantage qu'un pareil clip, une fois clipsé dans l'encoche des bords latéraux 7, ne peut plus être déplacé dans le sens longitudinal des panneaux.

Un clips 6 comporte une chambre 8 creuse ayant deux dents 9 disposées l'une vers l'autre. Le clips qui est constitué d'une matière légère et élastique, comporte également un oeillet 10 par lequel le clips peut être saisi, et par lequel, lorsque le clips doit être éloigné, il peut être retiré si les dents 9 sont écartées l'une de l'autre en utilisant par exemple un tournevis ou un outil comparable.

La figure 3 montre une forme de réalisation particulière où deux panneaux 2' sont reliés entre eux de telle façon qu'ils déterminent une chambre oblonge et creuse ayant la forme d'un parallélépipède. Ceci est créé par un plissage particulier des extrémités des bords latéraux de ces panneaux 2'. Une liaison est formée de manière comparable en utilisant des clips qui s'étendent sur une plus grande longueur parce qu'il n'est pas possible de les clipser à la main localement par dessus les bords latéraux repliés des panneaux.

En utilisant une pareille liaison on forme pour ainsi dire un panneau en sandwich grâce auquel des modifications à l'aspect général d'un meuble polyvalent suivant l'invention peuvent être apportées.

Les planches de rangement 5 utilisées pour l'achèvement du meuble polyvalent sont des planches rectangulaires. Une planche qui s'applique entre les diverses colonnes en fonction du profil choisi du meuble est utilisée en tant que planche de travail 4.

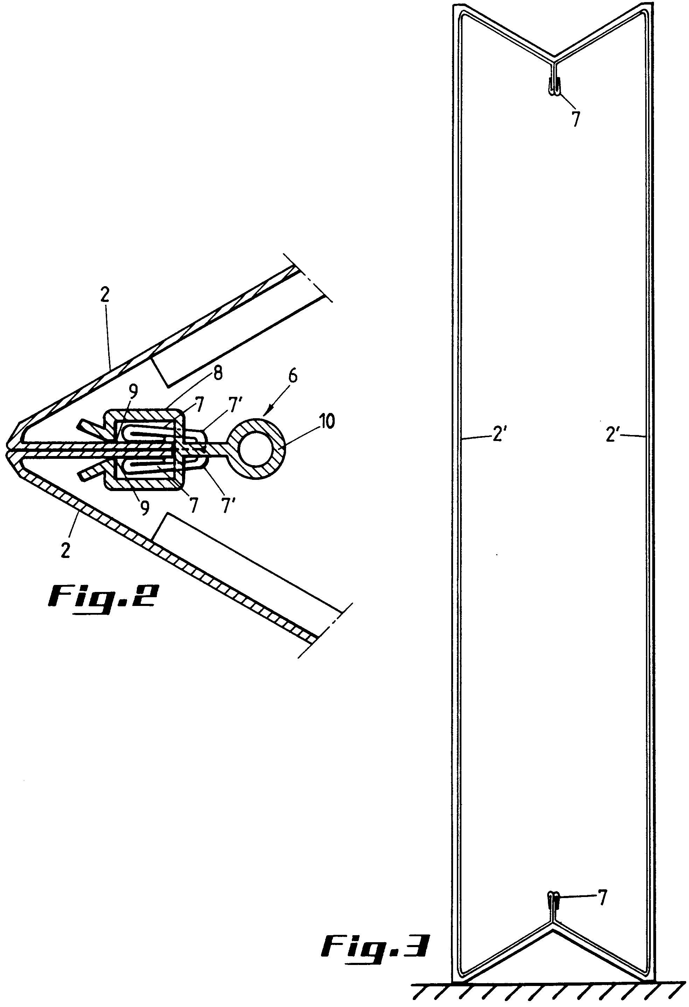

Le support des planches de rangement 5 est réalisé en utilisant des broches de support 11 (figure 4). La planche de travail 4 s'appuie sur certaines planches de travail 5. Une broche de support 11 comporte une aile 12 et deux plans 13 d'appui qui s'étendent parallèlement l'une par rapport à l'autre mais sont tournés sur 90° par rapport au plan déterminé par l'aile 12. Entre le véritable corp des broches de support 11 et l'aile 12 deux fentes 14 sont prévues qui ont l'épaisseur d'un panneau 2.

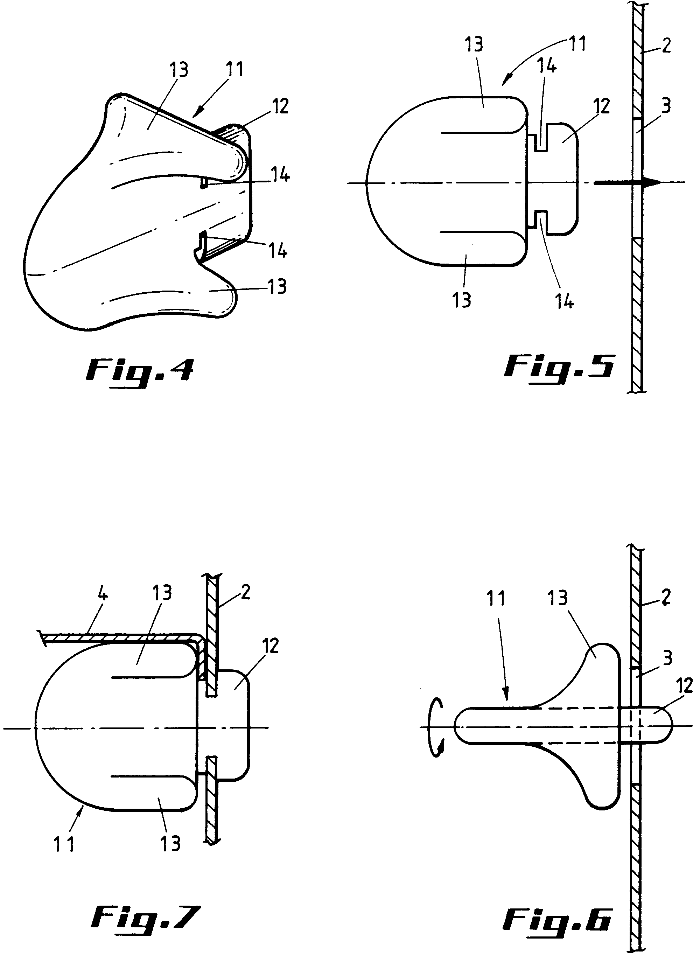

Lorsqu'une broche de support 11 doit être introduite dans les perforations 3 oblonges, qui s'étendent de façon horizontale lors de leur usage, cette broche est d'abord tournée sur 90° par rapport à la position illustrée à la figure 4 et ensuite poussée à travers une perforation 3; la broche de support est alors dans la position suivant la figure 6. Après une seconde rotation sur 90° la broche de support vient dans la position telle que reprise à la figure 7. Le panneau 2 pénètre dans les deux fentes 14 et l'aile 12 se trouve alors situé verticalement.

L'invention permet donc toutes les combinaisons possibles en hauteur, aussi bien des planches de rangement que de celles de travail. Un profil différent de celui illustré à la figure 1 est donc imaginable. Seulement dans ce dernier cas la planche de travail doit être adaptée à cette configuration particulière.

De la description donnée ci-dessus d'un meuble polyvalent suivant l'invention, apparaissent les diverses formes de réalisations qui peuvent formées à partir des panneaux formant les colonnes suivant l'invention.

Cette invention n'est dès lors pas limitée à la forme de réalisation décrite et plusieurs modifications peuvent être apportées et sans pour autant quitter le cadre de l'invention.

## Revendications

1. Meuble polyvalent qui peut servir de bureau, comptoir de réception, comptoir d'un magasin, etc.... et qui est formé par une série de colonnes et de planches de travail et de rangement destinées à être montée entre ces colonnes, caractérisé en ce que toutes les colonnes (1) sont formées par des panneaux (2) ayant des bords (7) latéraux pliés sur leur longueur et un moyen pour relier ces panneaux entre eux à l'aide de leur bords (7) latéraux, lesdits panneaux (2) étant pourvus de perforations (3) réparties sur leur surface et agencées pour y appliquer des broches (11) de support pour les planches (4) de rangement.

2. Meuble suivant la revendication 1, caractérisé en ce que ledit moyen est formé par des clips (6) qui sont clipsés sur les extrémités (7') des bords (7) latéraux desdits panneaux, lesquels extrémités sont à cette fin pliées en deux.

3. Meuble suivant la revendication 2, caractérisé en ce que lesdits clips (6) comportent une chambre (8) creuse ayant deux dents (9) disposées l'une vers l'autre et qui s'étendent au-dessus desdites extrémitées (7') pliées en deux des bords latéraux desdits panneaux.

4. Meuble suivant la revendication 1, caractérisé en ce que ledit moyen est formé en pliant les extrémités des bords latéraux desdits panneaux (2) de telle façon que le glissement l'un dans l'autre de deux panneaux devient possible.

5. Meuble suivant l'une des revendications 1 à 4, caractérisé en ce que lesdites perforations (3) sont longitudinales et s'entendent en position d'utilisation des colonnes (1) de façon horizontale.

6. Meuble suivant la revendication 5, caractérisé en ce que lesdites broches (11) de support comportent une aile (12) oblonge qui traverse lesdites perforations et deux plans (13) d'appui qui s'entendent de façon orthogonale sur cette aile, lesdits plans d'appui étant séparés de l'aile (12) par des fentes (14), de telle façon qu'après avoir glissé ladite aile (12) à travers lesdites perforations (13) et après rotation sur 90° de la broche de support, une planche (4) de rangement peut s'appuyer sur chaque plan (13) d'appui.

7. Meuble suivant l'une des revendications 1 à 6, caractérisé en ce que les bords latéraux (7) desdits panneaux (2) sont repliés de telle façon que trois panneaux forment une colonne.

8. Meuble suivant la revendication 4, caractérisé en ce que le plissement des extrémités des bords latéraux est réalisé de telle façon que deux panneaux s'étendent de façon parallèle l'un par rapport à l'autre et forment une colonne creuse ayant la forme d'un parallélépipède.

9. Meuble suivant l'une des revendications 2 à 7, caractérisé en ce qu'en certains endroits le bord (7') libre des bords (7) pliés en deux est découpé ce qui rend le clipsage d'un clips (6) possible.

*Fig.1*

Fig.2

Fig.3

Fig.4

Fig.5

Fig.7

Fig.6

Office européen
des brevets

**RAPPORT DE RECHERCHE EUROPEENNE**

Numero de la demande

EP    91 87 0163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-8 811 495 (FESER; LUTTER) <br> * page 9, ligne 9 - page 10, ligne 28; figures * <br> --- | 1 | A47B47/00 <br> F16B12/32 <br> A47F5/10 <br> F16B5/06 |
| Y | DE-A-3 906 936 (EUROPA CARTON) <br> * colonne 3, ligne 58 - colonne 6, ligne 15; figures * <br> --- | 1 | |
| A | FR-A-2 149 002 (BENHAMOU) <br> * figures * <br> --- | 2 | |
| A | DE-C-193 900 (GRUNDMANN) <br> * figure * <br> --- | 6 | |
| A | DE-B-1 295 281 (HAPPICH) <br> * figure 9 * <br><br> ----- | 3 | |

**DOMAINES TECHNIQUES RECHERCHES (Int. Cl.5)**

A47B
A47F
F16B

Le présent rapport a été établi pour toutes les revendications

| Lieu de la recherche | Date d'achèvement de la recherche | Examinateur |
|---|---|---|
| LA HAYE | 23 JANVIER 1992 | DE GROOT R. K. |